# EUROPEAN PATENT APPLICATION

(11) **EP 4 120 488 A1**
(43) Date of publication of application: **18.01.2023**
(21) Application number: 22183543.2
(22) Date of filing: 07.07.2022
(51) Int. Cl.: H02B 1/21, H01H 71/08, H01R 25/14, H02B 1/56, H02B 1/056

(54) **SYSTEM FOR THE SETTING UP OF SWITCHBOARDS**

(30) Priority: 13.07.2021 IT 202100018470
(71) Applicant: Filipetti - S.p.A., 20129 Milano (IT)
(72) Inventor: FILIPPETTI, Micol, 20129 MILANO (IT)
(74) Representative: Cutropia, Gianluigi

(57) **Abstract**

A system (100) for the setting up of switchboards includes: a switchboard with a busbar (7) and electrical output terminals, a base plate (1) suitable for being attached to the switchboard, a set of electrical input and output contacts (5, 52) arranged in the base plate (1) and suitable for going in contact with the busbar and the electrical output terminals of the switchboard, respectively, a support plate (2) suitable for being attached to the base plate (1), an electrical element (3) suitable for being mounted on the support plate (2), a first and a second electrical connector (4) having electrical conductors (6) suitable for being connected to the electrical input or output contacts (552) of the base plate and to the electrical input or output contacts (35, 36) of the electrical element.

## Description

The present invention relates to a system for the setting up of switchboards.

A switchboard is a part of an electrical system and it is installed downstream an electrical power distribution circuit. The switchboard generally consists of a closed cabinet, having one or more doors depending on the number and on the size of the components that are contained inside the cabinet.

Three main types of switchboards are known, each one being described by a specific IEC reference standard: distribution switchboards, automation switchboards, and machine switchboards.

A distribution switchboard mainly contains mainly protection and switching equipment. The distribution switchboard may include an input terminal block, often consisting of busbars, to which the power line of the switchboard is connected. In turn, the power line of a distribution switchboard may come from another distribution switchboard or may come directly from an output terminal block of a MV/LV transformer, as it is generally the case inside transformer substations. A protection and/or switching apparatus, which is known as circuit breaker or disconnector and is generally located in the upper right-hand corner, is generally connected in the output from the input terminal block. One or more supporting terminal blocks may be connected in the output from said main circuit breaker or disconnector, from which all the other protection and/or switching apparatuses and devices of the switchboard are powered in cascade.

Such a structure consisting of device and supporting terminal block can be repeated several times, depending on the functionality and purpose of the distribution switchboard.

If cascade-connected residual current circuit breakers are provided in the distribution switchboard, it is necessary to make an appropriate selection and setting of said residual current circuit breakers, so that selectivity in the activation of protections can be ensured.

The design of a distribution switchboard consists in the preparation of a project by a professional firm, and the components are uniquely defined according to the voltages/currents that must pass through the protection circuits and according to the services to be powered.

The assembly of a switchboard based on the design project is a time-consuming job that requires the intervention of specialized and skilled manual workers in order to connect the various components that are fixed to the busbars contained in the metal structure of the switchboard by means of cables with appropriate cross-section.

It must be considered that in a switchboard, the cost of labor accounts for a percentage ranging from 20% for simple switchboards to 40% for complex switchboards, compared to the total cost of a switchboard composed of structural works, components, wiring and labor.

In addition to the mere economic component, the time component and the accuracy of the work performed are also to be considered. In fact, since the activity is merely manual, the production of a switchboard requires a very long time, and there has not yet been either mass production of switchboards or large-scale automation due to the lack of a standard regarding the connectors of the various components produced by the main suppliers (ABB, Schneider, BTICINO among others).

In fact, the components of a switchboard provide for a standard system for fixing to the busbars (DIN), but they have a different distance between terminals and different cable fixing systems.

In addition to these minor manufacturing differences, the high degree of customization of the switchboards to be produced must be taken into account. The compliance with the design project makes all switchboards potentially different from each other.

In Italy, the market for the production of switchboards is entrusted to a number of professionals who are hired from time to time by the manufacturers who have been subcontracted for the wiring activities, which are usually carried out on site or in laboratories that are not suitable for "industrial" production.

Some suppliers have specialized in the creation of simplified wiring systems, such as the Phoenix Contact system, which has introduced other specific devices that allow the cables to be inserted into specific quick-connect terminal blocks, after fitting the cables with appropriate terminations (Clip-In). This simplifies the clamping and interconnection activities between elements mounted on the same bar, but it does not solve the labor problem and constrains the designers to include such a specific type of components in the design from the initial stage of the project.

In addition to wiring, the major manufacturers of switchboard components have defined some busbar proprietary systems, such as BTICIN's Tyfast and ABB's Unifix.

Even if you want to simplify the interconnection between elements of the same level of the switchboard, you will still have to choose one of the proprietary power transportation and distribution systems, falling into a technological lock-in, without eliminating or reducing the manual activity.

The adoption of these systems is often accompanied by specific drawing tools that allow the designer, once the reference technology has been identified, to have an aid when the layout of the switchboard is dawn in such a way to highlight any problems with overall dimensions and obtain a bill of materials of the components required for interconnection and distribution.

EP3499659A1 describes a switchboard system that includes:
A) a busbar having input electrical contacts and output electrical contacts of single phase type;
B) a support plate mounted on the busbar;
C) an electrical element mounted on the support plate;
D) a first electrical connector having electrical conductors suitable for being connected to the busbar and to the input electrical contacts of the electrical element; and
E) a second electrical connector having electrical conductors suitable for being connected to the busbar and to the output electrical contacts of the electric element.

Such a system does not have a base plate arranged between the busbar and the support plate. Therefore, such a system is not versatile and is not suitable for accommodating different electrical elements (e.g., circuit breaker, protection, relay, etc.). In addition, the support plate varies according to the busbar.

WO2018/215547A1 describes an electrical switchboard with a bracket that engages in a rear seat of the electrical element.

DE102007025367A1 describes electrical connectors comprising a base and cover.

JPH11297179 describes a structure of an electrical connector.

US2017/358416A1 describes a snap-fit circuit breaker.

EP0964491A1 describes a structure for connecting a removable electrical device.

The purpose of the present invention is to eliminate the drawbacks of the prior art by providing a system for the setting up of electrical switchboards that allows for the automated assembly of electrical distribution switchboards, thereby reducing labor costs and assembly time.

Another purpose of the present invention is to provide a system for the setting up of switchboards that is versatile and eliminates the technological constraints regarding the components used.

These purposes are achieved in accordance with the invention with the features of the independent claim.

Advantageous achievements of the invention appear from the dependent claims.

Further features of the invention will appear clearer from the following detailed description, which refers to a merely illustrative and therefore nonlimiting embodiment, illustrated in the appended drawings, wherein:
Fig. 1 is an exploded perspective view of the system for the setting up of switchboards according to the invention, in the case of two different electrical elements;
Fig. 2 is a perspective view of the system of Fig. 1 in assembled condition;
Fig. 3 is an exploded perspective view of a base plate of the system according to the invention, showing the electrical contacts embedded in the base plate;
Fig. 4 is a perspective view of the base plate of Fig. 3 with the electrical contacts in assembled condition;
Fig. 5 is a perspective view of a support plate assembled on the base plate;
Fig. 6 is a perspective view of an electrical element mounted on the support plate;
Fig. 7 is an exploded perspective view of a first embodiment of an electrical connector;
Fig. 8 is a perspective view of a body of the connector of Fig. 7 in which electrical contacts of the connector are assembled;
Fig. 9 is an exploded perspective view of a second embodiment of an electrical connector;
Fig. 10 is a perspective view of a body of the connector of Fig. 9 in which electrical contacts of the connector are assembled; and
Fig. 11 is the same view as Fig. 2 illustrating the system according to the invention in an electrical switchboard attached to a busbar.

With the aid of the figures, a system for the setting up of switchboards according to the invention is described, which is indicated by reference number 100.

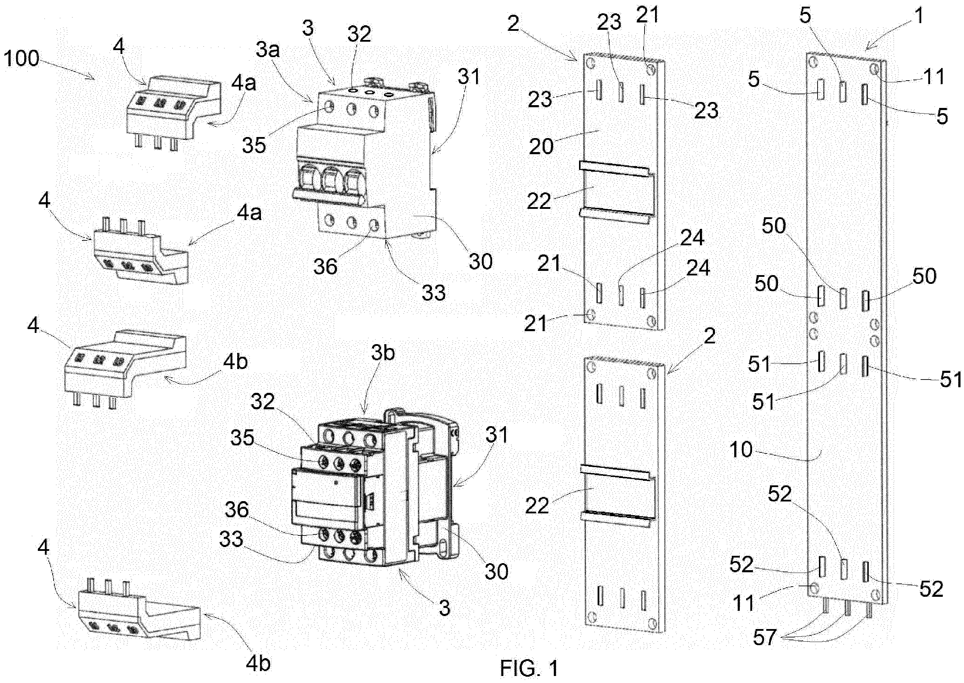

With reference to Figs. 1, 2 and 11, the system (100) comprises:
- a switchboard comprising a busbar (7) and electrical output terminals (not shown in the figures);
- a base plate (1) suitable for being fixed to the switchboard;
- at least one support plate (2) suitable for being fixed to the base plate (1),
- an electrical element (3) suitable for being mounted on the support plate (2), and
- electrical connectors (4) connected to the electrical element (3), to the support plate (2) and to the base plate (1).

The busbar (7) includes busbars for the passage of electrical current.

By way of example only, Figs. 1, 2 and 11 illustrate two different electrical elements (3) that are electrically connected in series:
- a first electrical element consisting of a residual current circuit breaker (3a) of three-phase type, having a user-operable lever, and
- a second electrical element consisting of an electrical protection (3b) having no user-operable lever.

In each case, each electrical element (3) comprises:
- a body (30) having an attachment seat (31),
- input holes (32) communicating with respective electrical input contacts (35), and
- output holes (33) communicating with respective output electrical contacts (36).

Since the switchboard is used in a three-phase electrical system, the input holes (32) are three in number and are suitable for receiving three input conductors (one for each phase) that will go in contact with the input electrical contacts (35) and the output holes (33) are three in number and are suitable for receiving three output conductors (one for each phase) that will go in contact with the output electrical contacts (36). In this way, the electrical element (3) operates as a circuit breaker or protection between the input conductors and the output conductors of the three-phase power supply of the switchboard.

Generally, the attachment seat (31) is arranged at the rear; the input holes (32) are arranged in upper position and the output holes (33) are arranged in lower position.

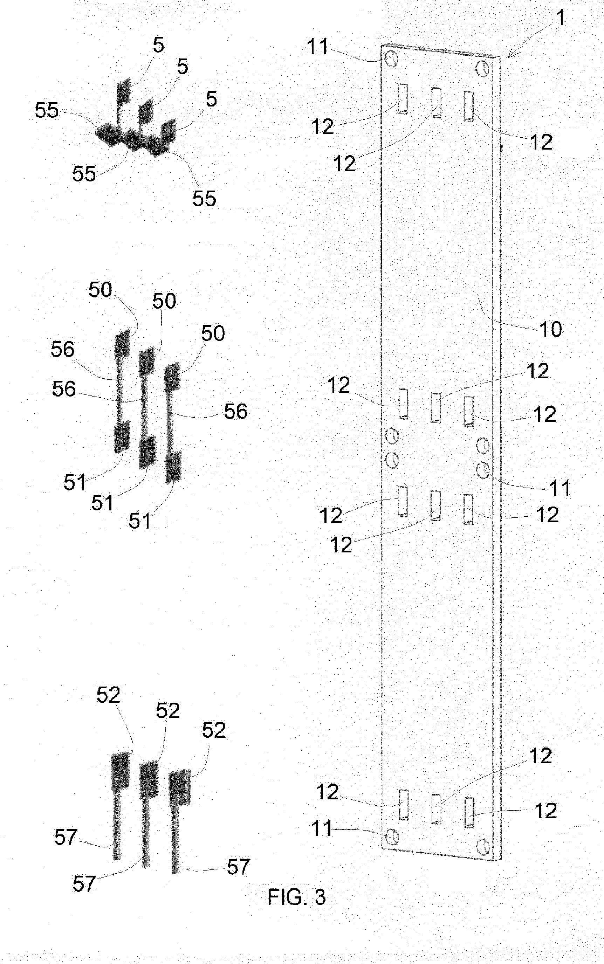

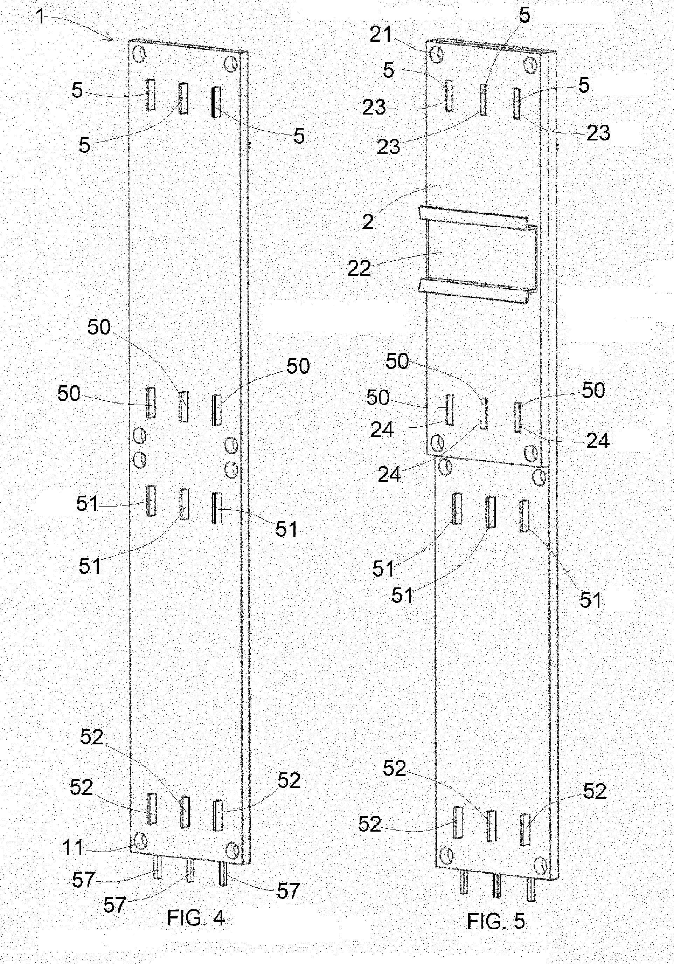

Referring to Figs. 3 and 4, the base plate (1) includes a rectangular plate (10) made of insulating material, such as fireproof plastic. The rectangular plate (10) has a plurality of holes (11) for being fixed to a switchboard, for example by means of screw means.

The base plate (1) has a set of three input electrical contacts (5) and a set of three output electrical contacts (52). The input electrical contacts (5) of the base plate are suitable for going in contact with the busbar (7) provided in the switchboard.

The output electrical contacts (52) of the base plate are suitable for going in contact with the electrical output terminals of the switchboard.

In the case where the base plate (1) is to accommodate two electrical elements (3) connected in series, the base plate (1) may include:
- first intermediate electrical contacts (50) suitable for going in contact with the output contacts of the first electrical element, and
- second intermediate electrical contacts (51) suitable for boing in contact with the input contacts of the second electrical element.

The first intermediate electrical contacts (50) are connected to the second intermediate electrical contacts (51) in order to make a series connection between the two electrical elements (3).

It must be considered that the base plate (1) has only electrical contacts and has no current-carrying bars and therefore is not a busbar.

The input electrical contacts (5), the first intermediate electrical contacts (50), the second intermediate electrical contacts (51) and the output electrical contacts (52) of the base plate are of three-phase type.

Advantageously, as shown in Figs. 3 and 4, the base plate (1) comprises:
- a set of three input electrical contacts (5), arranged in upper position,
- a set of three output electrical contacts (52) arranged in lower position,
- a set of three first intermediate electrical contacts (50) arranged in an intermediate position under the input electrical contacts (5), and
- a set of three second intermediate electrical contacts (51) arranged in an intermediate position under the first intermediate electrical contacts (50).

The rectangular plate (10) includes a plurality of slots (12) suitable for accommodating the sets of electrical contacts (5, 50, 51, 52).

The set of input electrical contacts (5) is connected to respective pads (55) suitable for being connected to the busbar (7).

The first set of intermediate electrical contacts (50) is connected to the second set of intermediate electrical contacts (51) via electrical conductors (56), so as to ensure an electrical connection in series between the two electrical elements (3).

The set of output electrical contacts (52) has output electrical conductors (57) that are suitable for being connected to the output electrical terminals that are the outputs of the switchboard.

With reference to Figs. 1 and 5, the support plate (2) includes a rectangular plate (20) made of insulating material, such as fireproof plastic. The rectangular plate (20) of the support plate has a plurality of holes (21) for fixing the support plate (2) to the base plate (1) and to the switchboard, for example by means of screw means. The holes (21) of the support plate are arranged in correspondence with the holes (11) of the base plate, so that screws are inserted through the support plate and the base plate and are screwed into the switchboard.

The support plate (2) includes a bracket (22) arranged in an intermediate position and protruding frontally, in such a way to be engaged in the attachment seat (31) of the electrical element (3).

The support plate (2) has three upper slots (23) arranged above the bracket (22) and three lower slots (24) arranged below the bracket (22).

When the support plate (2) is arranged on the base plate (1) the upper slots (23) of the support plate are arranged in correspondence with the set of input contacts (5) of the base plate, making the input contacts (5) accessible, and the lower slots (24) of the support plate are arranged in correspondence with the first set of intermediate contacts (50) of the base plate, making the intermediate contacts (50) accessible. If the base plate (1) does not have the intermediate electrical contacts (50, 51) because it includes only one electrical element, the lower slots (24) of the support plate are arranged in correspondence with the output contacts (52) of the base plate.

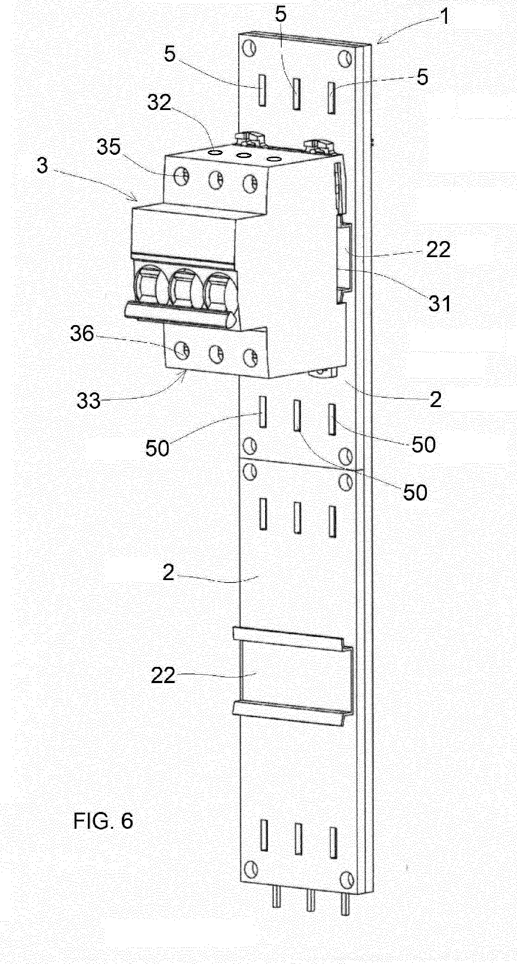

Fig. 6 illustrates an arrangement wherein two support plates (2) are mounted on a base plate (1) and one electrical element (3) is mounted on a support plate (2).

It should be noted that in this case the support plate (2) has the same width as the base plate (1) and a length equal to half the length of the base plate (1).

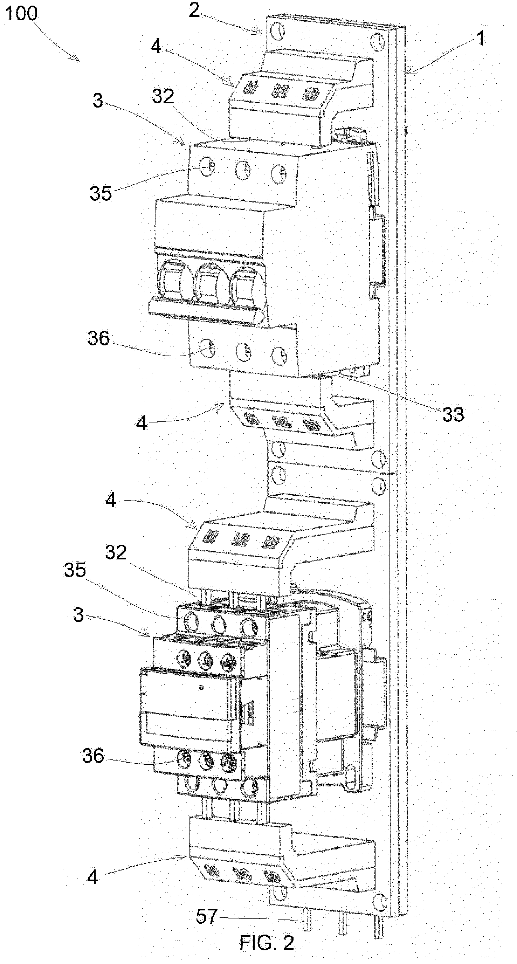

Once an electrical element (3) is mounted on the support plate (2), it is necessary to connect the input electrical contacts (35) of the electrical element (3) with the input contacts (5) of the base plate and the output electrical contacts (36) of the electrical element (3) with the first set of intermediate contacts (50) of the base plate. For this purpose, as shown in Fig. 2, two electrical connectors (4) are used, namely a first electrical connector (4) arranged above the electrical element (3) and a second electrical connector (4) arranged below the electrical element (3). The two electrical connectors (4) are identical.

If the base plate (1) has no intermediate contacts (50, 51), the second electrical connector connects the output electrical contacts of the electrical element with the output electrical contacts (52) of the base plate.

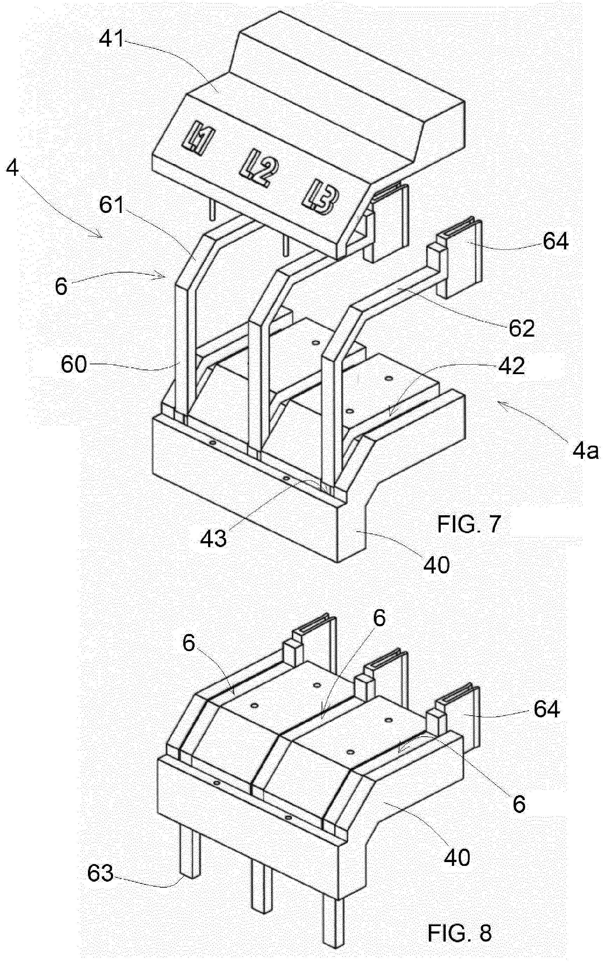

Referring to Figs. 7, 8, 9, and 10, each electrical connector (4) includes a body (40), a cover made of insulating plastic material, and three electrical conductors (6) arranged between the body and the cover.

Each electrical conductor (6) has an L-shaped bent rod shape, comprising a vertical section (60), a horizontal section (62) and a connecting section (61) inclined by 45° with respect to the vertical section (60) and the horizontal section (61).

The vertical section (60) ends with a tip (63) suitable for being inserted into an input hole (32) or an output hole (33) of the electrical element in order to go in contact with the input or output electrical contact (35, 36) of the electrical element. The horizontal section (62) ends with a clip (64) suitable for being inserted into the input or output slot (23, 24) of the support plate to engage an input or output electric contact (5, 50) of the base plate.

The body (40) has three seats (42) in the shape of channels, suitable for accommodating the electrical conductors (6). Each seat (42) communicates with a hole (43) with vertical axis in order to let the tip (63) of each electrical conductor exit the body (40), so that the tip (63) can be engaged in an input or output hole (32, 33) of the electrical element.

Figs. 7 and 8 illustrate a first embodiment of electrical connector, indicated by reference numeral 4a, suitable for being applied to an electrical element consisting of a circuit breaker (3a).

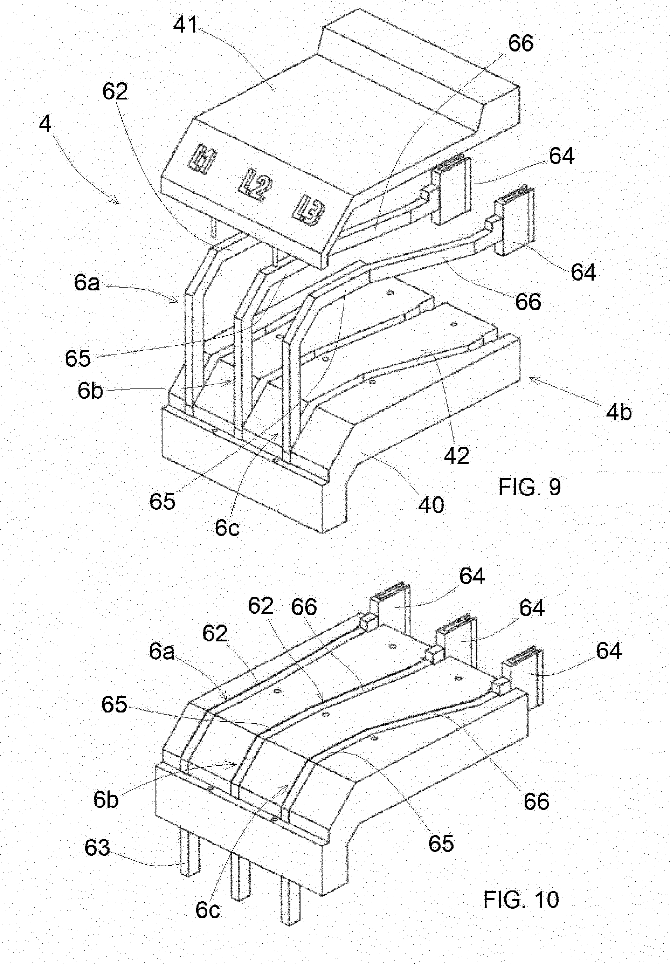

Figs. 9 and 10 illustrate a second embodiment of electrical connector, indicated by reference numeral 4b, suitable for being applied to an electrical element consisting of a protection (3b).

The electrical connector (4b) of the second embodiment comprises three electrical conductors (6) electrical conductors, wherein:
- a first electrical conductor (6a) has a horizontal portion (62) that is longer than the first electrical conductor of the electrical connector (4a) of the first embodiment;
- a second electrical conductor (6b) has a horizontal portion (62) comprising a straight portion (65) and an inclined portion (66) that diverges with respect to the horizontal portion (62) of the first electrical conductor;
- a third electrical conductor (6c) has a horizontal portion (62) comprising a straight portion (65) and a sloped portion (66) that diverges with respect to the inclined portion (66) of the second electrical conductor.

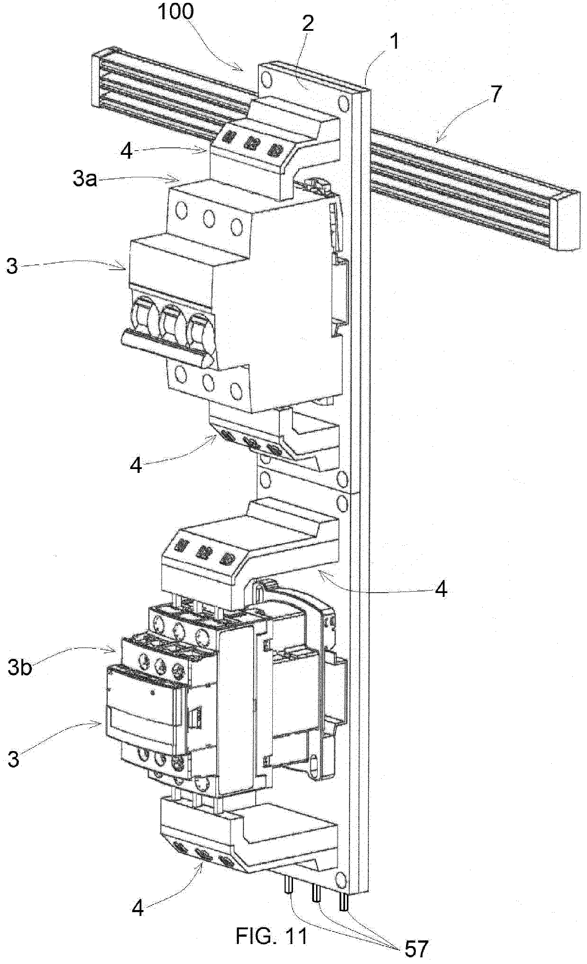

With reference to the embodiment of Fig. 11, four connectors (4) (starting from the top: a first, a second, a third and a fourth connector (4)) and two electrical elements (starting from the top: a first and a second electrical element) are shown.

The input contacts (5) of the base plate (1) are connected to the busbar (7) and to the conductors of the first connector (4). The conductors of the first connector (4) are connected to the input contacts of the first electrical element (3). The outputs of the first electrical element (3) are connected to the conductors of the second connector (4). The conductors of the second connector are connected to the first intermediate contacts (50). The first intermediate contacts (50) are connected to the second intermediate contacts (51). The second intermediate contacts (51) are connected to the conductors of the third connector (4). The conductors of the third connector (4) are connected to the inputs of the second electrical element (3). The outputs of the second electrical element (3) are connected to the conductors of the fourth connector (4). The conductors of the fourth connector (4) are connected to the output contacts (52) of the base plate. The output contacts (52) of the base plate (1) are suitable for being connected to the output terminals of the switchboard.

The development of the electrical connectors (4) for the electrical elements (3) produced by the major companies that manufacture electrical elements for switchboards makes it possible to use automated assembly tools for the pre-production of semi-finished products, each one consisting of two electrical connectors (4) and one electrical element (3) fixed to a support plate (2) that can be fixed directly to the base plate (1).

Thus, the system (100) allows for clip-connected switchboard components (64) towards a single distribution system.

In this way, it is possible to design automated assembly systems, which, starting from the design of the switchboard, can select the necessary semi-finished products (base plate (1), support plate (2), electrical connectors (4) and electrical elements (3)) from an automated warehouse in order to assemble them within a metal structure where the basic electrical distribution systems are fixed, without supplier constraints on the electrical components.

Numerous variations and equivalent modifications may be made to the present embodiment of the invention, which are within the reach of a person skilled in the art, which are, however, within the scope of the invention as expressed by the appended claims.

## Claims

1. System (100) for the setting up of switchboards, comprising:
- a switchboard comprising a busbar (7) comprising bars wherein electric current passes and electrical output clamps,
- at least one support plate (2),
- an electrical element (3) suitable for being mounted on the support plate (2); said electrical element (3) having electrical input contacts (35) and electrical output contacts (36),
- a first electrical connector (4) having electrical conductors (6) suitable for being connected to the electrical input contacts (35) of the electrical element,
- a second electrical connector (4) having electrical conductors (6) suitable for being connected to the electrical output contacts (36) of the electrical element, **characterized in that** it comprises
- a base plate (1) suitable for being fixed to the switchboard;
- electrical input contacts (5) disposed in the base plate (1) and suitable for going in contact with the busbar (7) of the switchboard,
- electrical output contacts (52) disposed in the base plate (1) and suitable for going in contact with the electrical output clamps of the switchboard, wherein said support plate (2) is fixed on the base plate (1);
the electrical conductors (6) of the first electrical connector (4) are connected to the electrical input contacts (5) of the base plate (1); and
the electrical conductors (6) of the second electrical connector (4) are connected to the electrical output contacts (52) of the base plate (1).

2. The system (100) of claim 1, wherein said electrical input contacts (5) and said electrical output contacts (52) of the base plate (1) are of three-phase type.

3. The system (100) of claim 1 or 2, wherein said electrical input contacts (5) of the base plate (1) comprise three electrical contacts; said electrical output contacts (52) of the base plate comprises three electrical contacts; said electrical conductors (6) of each electrical connector (4) comprise three electrical conductors.

4. The system (100) of any one of the preceding claims, wherein said electrical element (3) has a fixing seat (31) and said support plate (2) comprises a rectangular plate (20) and a bracket (22) that protrudes frontally in order to be fixed in the fixing seat (31) of the electrical element.

5. The system (100) of claim 4, wherein support plate (2) comprises:
- upper slots (23) formed in the rectangular plate above the bracket (22) and suitable for allowing the passage of electrical contacts of the base plate, and
- lower slots (24) obtained in the rectangular plate under the bracket (22) and suitable for allowing the passage of electrical contacts of the base plate.

6. The system (100) according to any one of the preceding claims, wherein said base plate (1) comprises a rectangular plate (10) having slots (12) suitable for accommodating said electrical input contacts and electric output contacts (5, 52) of the base plate.

7. The system (100) according to any one of the preceding claims, wherein the electrical input contacts (5) are arranged in upper position, the electrical output contacts (52) are arranged in lower position and said base plate (1) comprises:
- first intermediate electrical contacts (50) arranged under the electrical input contacts, and
- second intermediate electrical contacts (51) arranged under the first intermediate electrical contacts (50),
wherein the first intermediate electrical contacts (50) are electrically connected to the second intermediate electrical contacts (51).

8. The system (100) of claim 7, wherein said first intermediate electrical contacts (50) of the base plate and said second intermediate electrical contacts (51) of the base plate are of three-phase type.

9. The system (100) of claim 7 or 8, wherein said first intermediate electrical contacts (50) of the base plate comprise three intermediate electrical contacts and said second intermediate electrical contacts (51) of the base plate comprise three intermediate electrical contacts.

10. The system (100) according to any one of claims 7 to 9, comprising two support plates (2) mounted on a base plate (1), an electrical element (3) mounted on each support plate (2) and four electrical connectors (4),
wherein a first connector (4) has electrical conductors connected to the electrical input contacts (5) of the base plate and to the electrical input contacts of a first electrical element,
a second connector (4) has electrical conductors connected to the electrical output contacts of the first electrical element and to the first intermediate contacts (50) of the base plate,
a third connector (4) has electrical conductors connected to the second intermediate contacts (51) of the base plate and to the electrical input contacts of a second electrical element; and
a fourth connector (4) has electrical conductors connected to the electrical output contacts of the second electrical element and to the electrical output contacts (52) of the base plate.

11. The system (100) of claim 10, wherein the support plate (2) has the same width as the base plate (1) and a length equal to half the length of the base plate (1).

12. The system (100) according to any one of the preceding claims, wherein each electrical connector (4) comprises:
- a body (40),
- a cover (41), and
- three electrical conductors (6) disposed between the body and the cover.

13. The system (100) of claim 12, wherein each electrical conductor (6) of the connector is shaped like a L-bent rod, comprising a vertical section (60), a horizontal section (62) and a connecting section (61); the vertical section (60) ends with a tip (63) suitable for being inserted in an input hole (32) or in an output hole (33) of the electrical element to go in contact with the input or output electrical contact (35, 36) of the electrical connector; the horizontal section (62) ends with a clip (64) suitable for being inserted in an input or output slot (23, 24) of the support plate for fixing an electrical input or output contact (5, 50) of the base plate; the body (40) has three seats (42), in the shape of channels, suitable for accommodating the electrical conductors (6).

14. The system (100) of claim 13, wherein said electrical connector (4) comprises: a first electrical conductor (6a), a second electrical conductor (6b) and a third electrical conductor (6c); wherein the second electrical conductor (6b) has a horizontal portion (62) comprising a straight portion (65) and an inclined portion (66) that diverges from the horizontal portion (62) of the first electrical conductor; and the third electrical conductor (6c) has a horizontal portion (62) comprising a straight portion (65) and an inclined portion (66) that diverges from the inclined portion (66) of the second electrical conductor.
